# EUROPEAN PATENT SPECIFICATION

(11) **EP 1 950 459 B1**
(45) Date of publication and mention of the grant of the patent: **27.08.2014**
(21) Application number: 08250285.7
(22) Date of filing: 23.01.2008
(51) Int. Cl.: F16H 57/04, B62J 13/00

(54) **Straddle-type vehicle with belt type continuously variable transmission having resin-block-type belt**
Grätschsitz-Fahrzeug mit stufenlosem Riemenantrieb mit Harz-Treibriemen
Véhicule du type à enfourcher doté d'une transmission à variation continue de type courroie dotée d'une courroie de type bloc de résine

(30) Priority: 26.01.2007 JP 2007016497
(43) Date of publication of application: 30.07.2008
(73) Proprietor: Yamaha Hatsudoki Kabushiki Kaisha, Iwata-shi, Shizuoka 438-8501 (JP)
(72) Inventor: Ishida, Yousuke c/o Yamaha Hatsudoki Kabushiki Kaisha, Shizuoka-ken 438-8501 (JP)
(74) Representative: Zimmermann, Tankred Klaus

(56) References cited:
- GB-A- 2 342 688
- US-A- 4 671 782
- US-A1- 2002 134 598

## Description

### BACKGROUND

The present invention relates to a straddle-type vehicle provided with a belt type continuously variable transmission as known from US 2002/0134698 A having a resin-block-type belt.

Straddle-type vehicles, such as a motorcycle, provided with a belt type continuously variable transmission have been known (see JP-A-2002-147582, for example).

A belt type continuously variable transmission includes a primary sheave, a secondary sheave, and a V-belt wound around the primary sheave and the secondary sheave. Driving force of an engine is transmitted via a crankshaft to the primary sheave, the V-belt, and the secondary sheave in this order to change a speed ratio, and thereafter transmitted to drive wheels. The primary sheave, the V-belt, and the secondary sheave are housed in a transmission casing. More specifically, a belt chamber for housing the primary sheave, the V-belt, and the secondary sheave therein is defined in the transmission casing.

In the motorcycle disclosed in JP-A-2002-147582, a resin-block-type belt is employed as a V-belt to improve durability of the V-belt and prevent heat liberation due to deformation of the V-belt. The resin-block-type belt includes a number of resin blocks and a coupling member for coupling the resin blocks. However, being independent of each other, the resin blocks are likely to collide each other as the belt runs. Accordingly, the resin-block-type belt is prone to make noise as compared with a rubber belt.

To this end, providing a sound absorber on an inner surface of a transmission casing, which accommodates the resin-block-type belt, to thereby suppress noise is proposed in the motorcycle disclosed in JP-A-2002-147582.

The V-belt, and the primary sheave and the secondary sheave wound by the V-belt rotate at a high speed. A sound absorber should be located so as not to come into contact with any of the V-belt and the sheaves. In other words, the sound absorber is to be located at a position away from both the V-belt and the sheaves by a certain distance. Accordingly, when the sound absorber is provided on an inner surface of a transmission casing as in the case of the motorcycle disclosed in JP-A-2002-147582, securing space in the transmission casing in advance for the sound absorber is required. However, securing additional space inside the transmission casing for the sound absorber results in an increase of the volume of the belt chamber. Thus, the motorcycle disclosed in JP-A-2002-147582 is disadvantageous in that it requires an increase of the continuously variable transmission in size.

Meanwhile, sound absorbers generally have heat-retaining property. Accordingly, the temperature inside the belt chamber of the motorcycle disclosed in JP-A-2002-147582, in which the sound absorber is provided on the inner surface of the transmission casing, easily rises. This leads to another problem that, as the temperature of the belt chamber rises, the durability of the resin-block-type belt decreases.

### SUMMARY

It is an objet of the invention to provide an approach for noise suppression for a straddle-type vehicle provided with a belt type continuously variable transmission having a resin-block-type belt.

This object is achieved by a straddle-type vehicle of claim 1.

An aspect of the present invention provides a saddle-ride type motorcycle including: an engine unit having an engine, a belt type continuously variable transmission having a resin-block-type belt, and a transmission casing, in which a belt chamber for accommodating the belt type continuously variable transmission therein is defined; and an air passage that is either an intake passage for guiding air into the belt chamber or an exhaust passage for venting air out of the belt chamber. The air passage includes: a closed casing, in which an inlet port and an exhaust port are formed; and one or more partitions each projecting out of an inner wall of the closed casing toward an inside of the closed casing and having opposite side surfaces extending in a direction intersecting with a projecting direction of the partition. A flow path is formed on each of a side of one of the side surfaces of the partition and a side of the other side surface. Flow directions of the flow paths are opposite from each other. The flow paths form a curved flow path that runs from the inlet port to the exhaust port in the closed casing.

In the straddle-type vehicle, the air passage includes the closed casing and the partition that forms the curved flow path in the closed casing. When a flow path is curved inside the closed casing as described above, the flow path can be formed long in a confined space. Accordingly, noise produced by the resin-block-type belt in the belt chamber is effectively reduced in the closed casing before escaping outside.

Meanwhile, from a viewpoint of smooth air flow for inducing and exhausting air without stagnation, an air flow path is preferably not curved. Nevertheless, in the closed casing of the straddle-type vehicle, a curved flow path is intentionally formed using the partitions. This structure allows to inhibit rectilinear propagation of high-frequency sound waves that are likely to propagate rectilinearly. Hence, leakage of high-frequency sound waves produced by the resin-block-type belt from inside the belt chamber to the outside can be suppressed. Thus, the straddle-type vehicle is capable of favorably suppressing noise produced by the resin-block-type belt.

An embodiment of the present invention provides a noise suppressor appropriate for a straddle-type vehicle provided with a belt type continuously variable transmission having a resin-block-type belt.

As described above, the present invention is useful for straddle-type vehicles such as a motorcycle.

### BRIEF DESCRIPTION OF THE DRAWINGS

Embodiments of the invention are described hereinafter, by way of example only, with reference to the accompanying drawings.

FIG. 1 is a side view of a motorcycle according to an embodiment of the present invention.

Fig. 2 is a right side view showing a portion of the motorcycle according to the embodiment.

FIG. 3 is a cross-sectional view of an engine unit.

FIG. 4 (a) is a cross-sectional view of a resin-block-type belt, and FIG. 4(b) is a side view of the same.

FIGs. 5(a) and 5(b) each are developed views of a casing.

FIG. 6 is a cross-sectional view of the casing.

FIG. 7 is a perspective view of a second crankcase block and an inner casing.

FIG. 8(a) is cross-sectional views of a partition wall according to a modification, and FIG. 8(b) is a cross-sectional view of a partition wall according to another modification.

### DETAILED DESCRIPTION

The present inventor has conducted extensive studies to suppress noise produced by a belt type continuously variable transmission having a resin-block-type belt, and found that a major portion of the noise is high-frequency sound wave, which is high-pitched noise produced by the resin-block-type belt. The inventor has also directed his attention to a fact that a high-frequency sound wave is likely to propagate rectilinearly and have low transmittance.

Based on the study of the cause of the noise, the inventor has examined about relationships between the air passage for cooling the belt chamber and reduction of the high-frequency sound wave, and made the present invention.

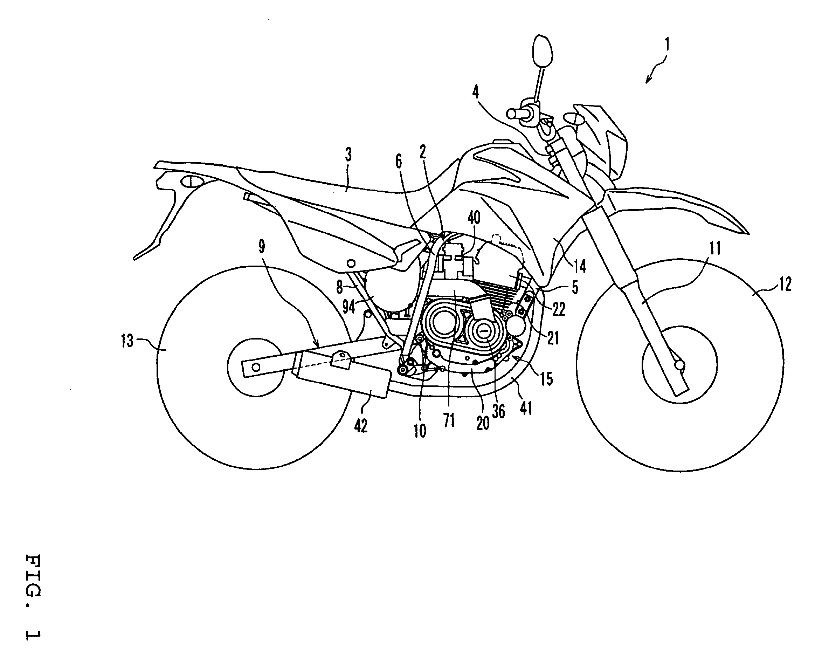

FIG. 1 shows a straddle-type vehicle according to a first embodiment is a motorcycle 1. The motorcycle 1 includes a body frame 2 defining a framework, and a seat 3 on which a rider or passenger is to be seated. The motorcycle 1 is a so-called off-road motorcycle. The straddle-type vehicle according to the invention is not limited to the off-road motorcycle and may be a motorcycle-type, scooter-type, so-called moped-type, or another motorcycle other than the off-road type. Forward, rear, left, and right directions in the following descriptions denote directions as viewed from a rider seated on the seat 3.

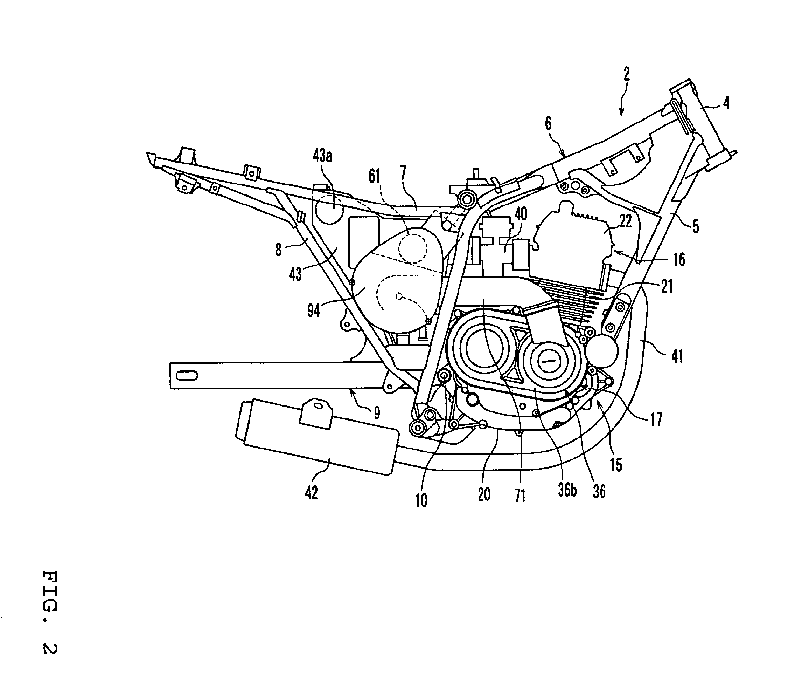

FIG. 2 a right side view of a portion (components around the body frame 2) of FIG. 1. As shown in FIG. 2, the body frame 2 includes a head pipe 4, a down tube 5 extending downward from the head pipe 4, and a main tube 6 extending above the down tube 5 rearward from the head pipe 4. The main tube 6 extends rearward from the head pipe 4. The main tube 6 is bifurcated at a midway thereof to the right and to the left. The main tube 6 is curved at a portion rearward of the bifurcated portion to extend downward.

A pair of left and right seat rails 7 are connected to the main tube 6 at a portion near the curved section. The seat rails 7 extend rearward. Lower ends of the left and right seat rails 7 are connected to one ends of a backstay 8. The other ends of the backstay 8 are connected to lower left and right bifurcated ends of the main tube 6. A rear arm 9 is coupled to the lower ends of the main tube 6 with a pivot shaft 10 therebetween.

A lower end of the head pipe 4 is connected to a front fork 11 (see FIG. 1). As shown in FIG. 1, a front wheel 12 is coupled to the front fork 11, and a rear wheel 13 is coupled to a rear end of the rear arm 9. A cover 14 is provided above the body frame 2 to cover the body frame 2. The seat 3 is at a slightly rearward position from a center of the cover 14.

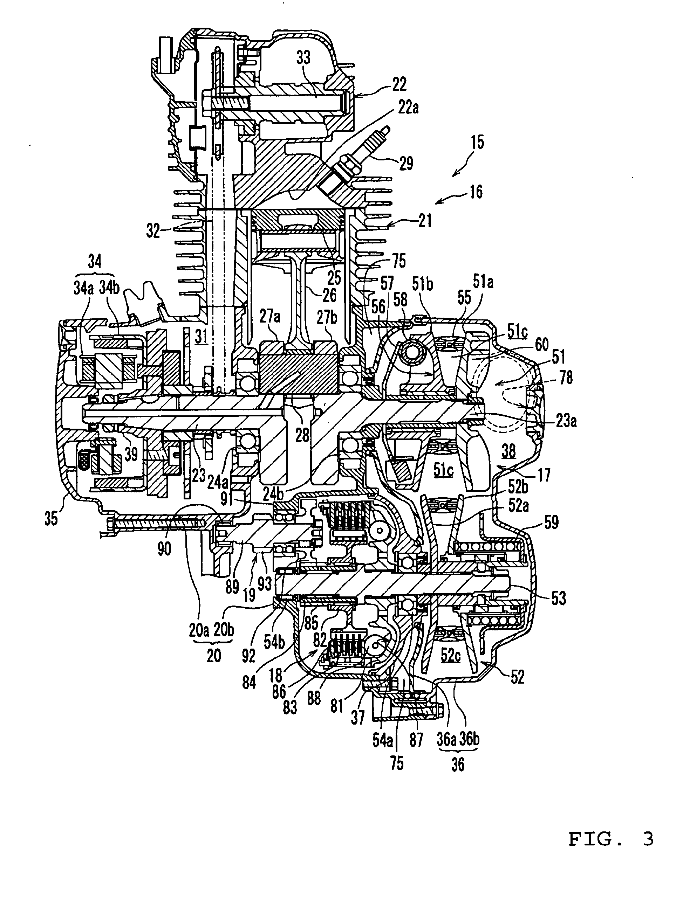

As shown in FIG. 2, an engine unit 15 is attached to (suspended from) the down tube 5 and the main tube 6 to be positioned therebetween. As shown in FIG. 3, the engine unit 15 is formed by integrating an engine 15(a) belt type continuously variable transmission (hereinafter referred to as "CVT") 17, and the like together. Driving force generated in the engine unit 15 is transmitted to the rear wheel 13 (see FIG. 1) via power transmission mechanism, such as a chain belt (not shown).

FIG. 3 is a cross-sectional view of the engine unit 15. As shown in FIG. 3, the engine unit 15 includes an engine 16, the CVT 17, a centrifugal clutch 18, and a reduction mechanism 19. The embodiment describes the engine 16 as being a four-cycle single-cylinder engine, however, the engine 16 may alternatively be, for example, a two-cycle engine. The engine 16 may be a multiple cylinder engine.

The engine 16 includes a crankcase 20, a cylinder 21, and a cylinder head 22. The cylinder 21 is attached to the crankcase 20. The cylinder head 22 is attached to a distal end of the cylinder 21.

A piston 25 is slidably inserted into the cylinder 21. The piston 25 is coupled to an end of a connecting rod 26. The other end of the connecting rod 26 is coupled to a crank pin 28. The crank pin 28 is provided between a left crank arm 27a and a right crank arm 27b of a crankshaft 23.

A recess 22a, and an inlet port and an exhaust port, which are not shown both of which communicate with the recess 22a, are defined in the cylinder head 22. An ignition plug 29 is inserted into the cylinder head 22.

An intake pipe 40 (see FIGs. 1 and 2) is connected to the inlet port. As shown in FIG. 2, an air cleaner 43 is connected to a rear end of the intake pipe 40. An intake port 43a is formed in the air cleaner 43 to induce air from the outside into the air cleaner 43.

An exhaust pipe 41 (see FIGs. 1 and 2) is connected to the exhaust port. As shown in FIG. 2, the exhaust pipe 41 extends from the cylinder head 22 frontward and obliquely downward toward the right, and then extends rearward in a curved manner passing below a transmission casing 36 of the engine unit 15 further rearward. A muffler 42 is connected to a rear end of the exhaust pipe 41.

As shown in FIG. 3, a cam chain chamber 31 that connects between an interior of the crankcase 20 and an interior of the cylinder head 22 is defined inside the cylinder 21 at a left portion thereof. A timing chain 32 is provided in the cam chain chamber 31. The timing chain 32 is wound around the crankshaft 23 and a cam shaft 33. The cam shaft 33 is provided at a top portion in the cylinder head 22 and connected with an intake valve and an exhaust valve. This configuration causes the cam shaft 33 to rotate in accordance with rotation of the crankshaft 23, which opens or closes the intake valve and the exhaust valve.

The crankcase 20 is split into two blocks; a first crankcase block 20a on the left and a second crankcase block 20b on the right. The first crankcase block 20a and the second crankcase block 20b are in butt-contact with each other along a vehicle width direction. A recess, which is recessed toward the left, is defined in a rear half of the second crankcase block 20b. A clutch cover 37 is situated to face the recess, and seals the recess. The recess defines a clutch chamber in which the centrifugal clutch 18 is provided.

The crankshaft 23 is accommodated in the crankcase 20. The crankshaft 23 extending in the vehicle width direction is horizontally situated. The crankshaft 23 is supported by the first crankcase block 20a with a bearing 24a therebetween and supported by the second crankcase block 20b with a bearing 24b therebetween.

A generator casing 35 is attached to a left portion of a front half of the first crankcase block 20a. The generator casing 35 and the first crankcase block 20a define a generator chamber. A generator 34 is accommodated in the generator chamber. The generator 34 includes a stator 34a and a rotor 34b facing the stator 34a. The rotor 34b is fixed to a sleeve 39 that rotates with the crankshaft 23. The stator 34a is fixed to the generator casing 35. This structure causes the rotor 34b to rotate relative to the stator 34a as the crankshaft 23 rotates. As a result, electricity is generated.

The transmission casing 36, which accommodates the CVT 17, is attached to the right side of the second crankcase block 20b. The transmission casing 36 is independent of the crankcase 20, and has an inner casing 36a and an outer casing 36b. The inner casing 36a is attached to the right side of the crankcase 30, and the outer casing 36b is attached to the right side of the inner casing 36a. The inner casing 36a and the outer casing 36b define a belt chamber 38 that accommodates the CVT 17 therein.

The CVT 17 includes a primary sheave 51, a secondary sheave 52, and a V-belt 55 wound around the primary sheave 51 and the secondary sheave 52. The primary sheave 51 is attached to the crankshaft 23. More specifically, a right end of the crankshaft 23 extends through the second crankcase block 20b and the inner casing 36a to the belt chamber 38. The primary sheave 51 is attached to the right end of the crankshaft 23. In the following descriptions, a right portion (more strictly, a portion more right than the bearing 24b) of the crankshaft 23 is referred to as a "primary sheave shaft 23a."

The primary sheave 51 includes a stationary sheave member 51a and a movable sheave member 51b facing the stationary sheave member 51a. The stationary sheave member 51a is fixed to a right portion of the primary sheave shaft 23a. The movable sheave member 51b is located on the left of the stationary sheave member 51a and slidably attached to the primary sheave shaft 23a.

A belt groove is defined between the stationary sheave member 51a and the movable sheave member 51b. A cam surface 56 is formed on a left side surface of the movable sheave member 51b. A cam plate 57 is provided on the left of the cam surface 56. A roller weight 58 is provided between the cam surface 56 of the movable sheave member 51b and the cam plate 57.

A plurality of vanes 60 for blowing air are formed on the right portion of the stationary sheave member 51a. An intake opening 78 is formed in a portion of the outer casing 36b, above the vanes 60. An intake duct 71 (see FIG. 2), which will be described later, is connected with the intake opening 78.

A secondary sheave shaft 53 is provided in the rear half of the crankcase 20. The secondary sheave shaft 53, into which the secondary sheave 52 is fitted, extends parallel with the crankshaft 23. The secondary sheave shaft 53 is supported at a right side of its center portion by the clutch cover 37 with a bearing 54a therebetween. The secondary sheave shaft 53 is supported at its left end by a left end of the second crankcase block 20b with a bearing 54b therebetween. The right end of the secondary sheave shaft 53 is coupled to the secondary sheave 52.

The secondary sheave 52 includes a stationary sheave member 52a, which is on an inner side in the vehicle width direction, and a movable sheave member 52b, which is on an outer side in the vehicle width direction and opposed to the stationary sheave member 52a. A cylindrically-shaped shaft core of the stationary sheave member 52a is spline-fitted into the secondary sheave shaft 53. A V-shaped belt groove 52c is defined between the stationary sheave member 52a and the movable sheave member 52b. The movable sheave member 52b is attached to the right portion of the secondary sheave shaft 53. The movable sheave member 52b rotates with the secondary sheave shaft 53 and is slidable in an axial direction of the secondary sheave shaft 53.

A compression coil spring 59 is provided on the right of the secondary sheave 52. The compression coil spring 59 urges the movable sheave member 52b leftward.

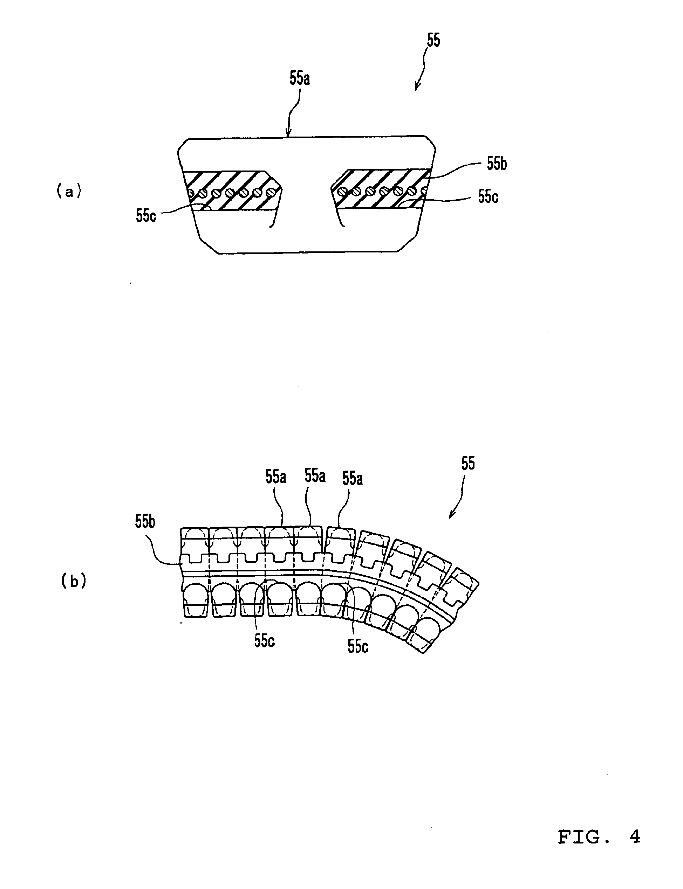

As shown in FIG. 4(a), the V-belt 55 includes a plurality of laterally-elongated, H-shaped resin blocks 55(a) and a pair of coupling members 55 (b) that couple the plurality of resin blocks 55 (a) together. Each resin block 55(a) is formed into a V-shape bearing an laterally-elongated-H-shaped cross section. This structure allows the resin blocks 55 (a) to conform to shapes of the belt groove 51c in the primary sheave 51 and the belt groove 52c in the secondary sheave 52 (see FIG. 3). A recess 55c, which is recessed toward a center of the resin block 55 (a), is defined in each side surface of the resin block 55. The pair of the coupling members 55(b) are fit into the recess 55c. As shown in FIG. 4(b), each coupling member 55 (b) extends in a direction along which the resin blocks 55(a) are aligned.

As shown in FIG. 3, the centrifugal clutch 18 is a multiplate wet clutch. The centrifugal clutch 18 includes a substantially-cylindrical clutch housing 81 and a clutch boss 82. The clutch housing 81 is spline-fitted into the secondary sheave shaft 53 to be rotated integrally with the secondary sheave shaft 53. A plurality of ring-shaped clutch plates 83 are attached to the clutch housing 81. The clutch plates 83 are aligned in the axial direction of the secondary sheave shaft 53 and spaced from each other.

A cylindrical gear 85 is peripherally fitted for rotation into a left portion of the secondary sheave shaft 53 with a bearing 84 therebetween. The clutch boss 82 is provided at a position radially inward of the clutch plates 83 and radially outward of the gear 85 and in mesh with the gear 85. This configuration allows the gear 85 to rotate with the clutch boss 82. A plurality of ring-shaped friction discs 86 are attached to the clutch boss 82 at radially outward positions. The friction discs 86 are aligned in an axial direction of the secondary sheave shaft 53 and spaced from each other. Each friction disc 86 is positioned between adjacent clutch plates 83, 83.

A plurality of cam surfaces 87 are formed on the left of the clutch housing 81. A roller weight 88 is provided between the cam surfaces 87 and a rightmost one of the clutch plates 83 that faces the cam surfaces 87.

The centrifugal clutch 18 is automatically switched between a clutch-in state (engaged state) and a clutch-off state (disengaged state) according to the magnitude of a centrifugal force applied on the roller weight 88.

More specifically, when the clutch housing 81 rotates at a rotational speed equal to or higher than a predetermined speed, the roller weight 88 is moved radially outward by a centrifugal force, thereby pressing the clutch plates 83 leftward. This consequently brings the clutch plates 83 and the friction discs 86 into press-contact with each other and hence into the clutch-in state, in which a driving force is transmitted from the secondary sheave shaft 53 to an output shaft 85 (not shown) via the centrifugal clutch 18.

On the other hand, when a rotational speed of the clutch housing 81 decreases to be lower than the predetermined speed, the centrifugal force exerted on the roller weight 88 decreases, causing the roller weight 88 to move radially inward. This consequently releases the press-contact between the clutch plates 83 and the friction discs 86, and hence brings the clutch plates 83 and the friction discs 86 into the clutch-off state, in which a driving force is not transmitted from the secondary sheave shaft 53 the output shaft 85. In FIG. 3, a portion below the secondary sheave shaft 53 indicates the clutch-in state, and a portion above the same indicates the clutch-off state.

The reduction mechanism 19 is interposed between the centrifugal clutch 18 and the output shaft (not shown). The reduction mechanism 19 has a speed change shaft 89 situated parallel with the secondary sheave shaft 53. The speed change shaft 89 is rotatably supported by the first crankcase block 20a with a bearing 90 therebetween. The speed change shaft 89 is also rotatably supported by the second crankcase block 20b with a bearing 91 therebetween. A first speed-change gear 92 to be brought into engagement with the gear 85 is provided on a right end of the speed change shaft 89.

A second speed change gear 93, of which diameter is smaller than that of the first speed change gear 92, is provided centrally on the speed change shaft 89. The second speed change gear 93 is positioned for engagement with the output shaft (not shown) or a gear (not shown) provided on the output shaft.

Constructed as described above, the clutch boss 82 and the output shaft are coupled together with the gear 85, the first speed change gear 92, the speed change shaft 89, the second speed change gear 93, and the like therebetween. Accordingly, as the clutch boss 82 rotates, the output shaft rotates. Although not shown, a power transmission mechanism such as a chain for transmitting a driving force from the output shaft to the rear wheel 13 (see FIG. 1) is wound around the output shaft. The power transmission mechanism is not limited to the chain, and can be a transmission belt, a gear mechanism formed by combining a plurality of gears, a drive shaft, or a like member.

The structure of the engine unit 15 has been described above. Next, the structure of the belt chamber 38 for inducing cooling air will be described.

As shown in FIG. 2, the intake duct 71 is connected to a front portion (front portion of the outer casing 36b) of the transmission casing 36. The intake duct 71 extends upward from the transmission casing 36, and then extends rearward. The intake duct 71 extends to a position rearward of the main tube 6. A closed casing 94 is connected to a rear end of the intake duct 71.

The closed casing 94 is blow the seat 3 (see FIG. 1). The closed casing 94 is situated such that an inlet port 61, which will be described later, is at a position higher than the pivot shaft 10. In the embodiment, the intake duct 71 and the closed casing 94 form an air passage for guiding air from the outside into the belt chamber 38 (see FIG. 3).

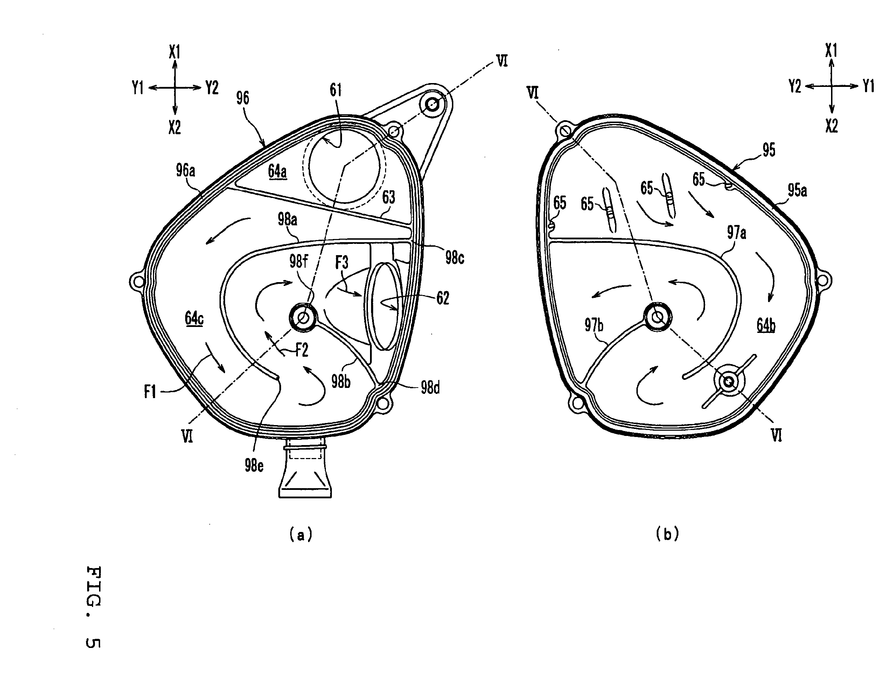

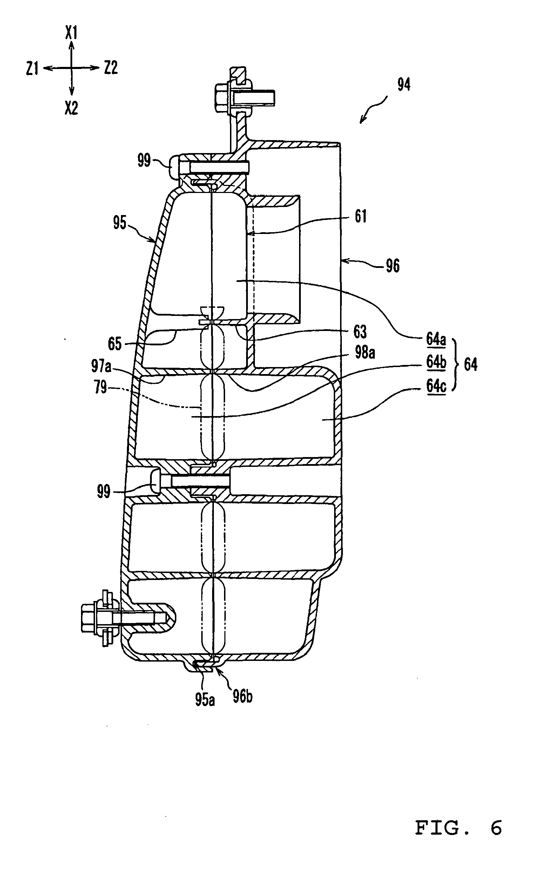

FIGs. 5(a) and 5(b) are each a developed view of the closed casing 94. FIG. 6 is a cross-sectional view of the closed casing 94. For clarity, X1, X2, Y1, Y2, Z1, and Z2 directions are defined as shown in FIGs. 5(a) to 6 with respect to the closed casing 94. Straight lines X1-X2, Y1-Y2, and Z1-Z2 intersect at right angles one another.

As shown in FIG. 6, the closed casing 94 is formed with a dish-shaped first casing member 95 and a dish-shaped second casing member 96. As shown in FIGs. 5(a) and 5(b), the first casing member 95 and the second casing member 96 are shaped such that developed faces thereof conform to each other. As shown in FIG. 6, the first casing member 95 and the second casing member 96 are aligned in the Z direction (Z1-Z2 direction) and assembled together with the conforming faces abutted each other. More specifically, a rib 96a (see FIG. 5(a)) provided upright on a periphery of the second casing member 96 is fitted into a recess 95 (a) (see FIG. 5(b)) defined in a periphery of the first casing member 95. A bolt 99 fastens the first casing member 95 and the second casing member 96 together.

As shown in FIG. 5(a), the inlet port 61 is formed in the second casing member 96. As shown in FIG. 6, the inlet port 61 is formed in the second casing member 96 centrally in the Z direction and faces the first casing member 95. As shown in FIG. 5(a), an exhaust port 62 is formed in the second casing member 96 on a side surface facing the Y2 direction.

A partition wall 63 is formed on the second casing member 96 at a position spaced from the inlet port 61 in the X2 direction. The partition wall 63 partitions a space in the second casing member 96 into a space on the inlet port 61 side and a space on the exhaust port 62 side. The partition wall 63 projects out of the second casing member 96 toward the inside of the closed casing 94 (in the Z1 direction). As shown in FIG. 6, the partition wall 63 is formed integrally with the second casing member 96. The partition wall 63 and the second casing member 96 form an air flow path 64a. The air flow path 64a extends from the inlet port 61 toward the first casing member 95.

As shown in FIG. 5(a), partition walls 98a and 98b, each of which is a curved plate piece, are formed on the second casing member 96. The partition walls 98a and 98b are formed integrally with the second casing member 96. The partition walls 98a and 98b project out of the second casing member 96 toward the inside of the closed casing 94 (in the Z1 direction) (see FIG. 6). As shown in FIG. 5(a), the partition walls 98a and 98b, and the second casing member 96 form an air flow path 64c.

A longitudinal end 98c of the partition wall 98a and a longitudinal end 98d of the partition wall 98b are connected with an inner wall of the closed casing 94 as viewed from a projecting direction (Z1 direction) of the partition walls 98a and 98b. The other longitudinal ends 98e and 98f of the partition walls 98a and 98b are separated from the inner wall of the closed casing 94.

Each of the partition walls 98a and 98b has side surfaces extending in a direction intersecting with the projecting direction (Z1 direction). A first flow path F1 that runs from the one end 98c of the partition wall 98a to the other end 98e of the same is formed on a side of one of the side surfaces of the partition wall 98a. A second flow path F2 for guiding air from the one end 98c of the partition wall 98a to the other end 98e of the same is formed on a side of the other side surface of the partition wall 98a. The second flow path F2 is connected with a downstream end of the first flow path F1. Flow directions of the flow paths F1 and F2 are opposite from each other with the partition wall 98a therebetween. The flow paths F1 and F2 form a U-shaped flow path.

The second flow path F2 is formed on a side of one of the side surfaces of the partition wall 98b so as to guide air from the one end 98d of the partition wall 98b toward the other end 98f. A third flow path F3 that runs from the other end 98f of the partition wall 98b to the one end 98d is formed on a side of the other side surface of the partition wall 98b. The third flow path F3 is connected with a downstream end of the second flow path F2. Flow directions of the flow paths F2 and F3 are opposite from each other with the partition wall 98b therebetween. Thus, the flow paths F2 and F3 form a U-shaped flow path.

As described above, the air flow path 64c includes the U-shaped flow paths, thereby forming a serpentine flow. A bottom (a surface facing the Z2 direction) of the second casing member 96 is recessed from a surface of the inlet port 61 in the Z2 direction toward the exhaust port 62 (see FIG. 6). Accordingly, a depth in the Z direction and a cross-sectional area of the air flow path 64c increase toward its downstream end (neighborhood of the exhaust port 62).

As shown in FIG. 5(b), a support 65 supporting the partition wall 63 (see FIG. 5(a)) is formed in the first casing member 95. As shown in FIG. 6, the support 65 engages with the partition wall 63 provided on the second casing member 96.

As shown in FIG. 5(b), partition walls 97a and 97b, which are correspondingly shaped to the partition walls 98a and 98b (see FIG. 5(a)), respectively, are attached to the first casing member 95. The partition walls 97a and 97b are formed integrally with the first casing member 95 and project out of the first casing member 95 toward the inside of the closed casing 94 (in the Z2 direction) (see FIG. 6).

The partition walls 97a and 97b, and the first casing member 95 form an air flow path 64b. As shown in FIG. 6, the air flow path 64b is connected with a downstream end of the air flow path 64a formed in the second casing member 96. Details of the partition walls 97a and 97b, curved flow paths formed by the same, and the like are similar to those of the partition walls 98a and 98b, and hence repeated descriptions are omitted.

According to the structure, when the first casing member 95 and the second casing member 96 are assembled together, the partition walls 98a and 97a are butt-joined together and the partition walls 98b and 97b are butt-joined together. Consequently, the air flow paths 64b and 64c are butt-joined. As shown in FIG. 6, the air flow paths 64a, 64b, and 64c form an air flow path 64 that guides air from the inlet port 61 (see FIG. 5(a)) to the exhaust port 62 (see FIG. 5(a)).

As shown in FIG. 6, an air filter 79 for filtering out dusts from air to thereby clean the air is provided between the first casing member 95 and the second casing member 96 at a position spaced from the support 65 in the X2 direction. The air filter 79 is sandwiched between the partition walls 97a and 97b, and the partition walls 98a and 98b to be held therebetween. The air flow path 64 is partitioned at a midway thereof by the air filter 79 into the air flow path 64b on the inlet port 61 side and the air flow path 64c on the exhaust port 62 side.

Next, the structure for venting cooling air out of the belt chamber 38 will be described.

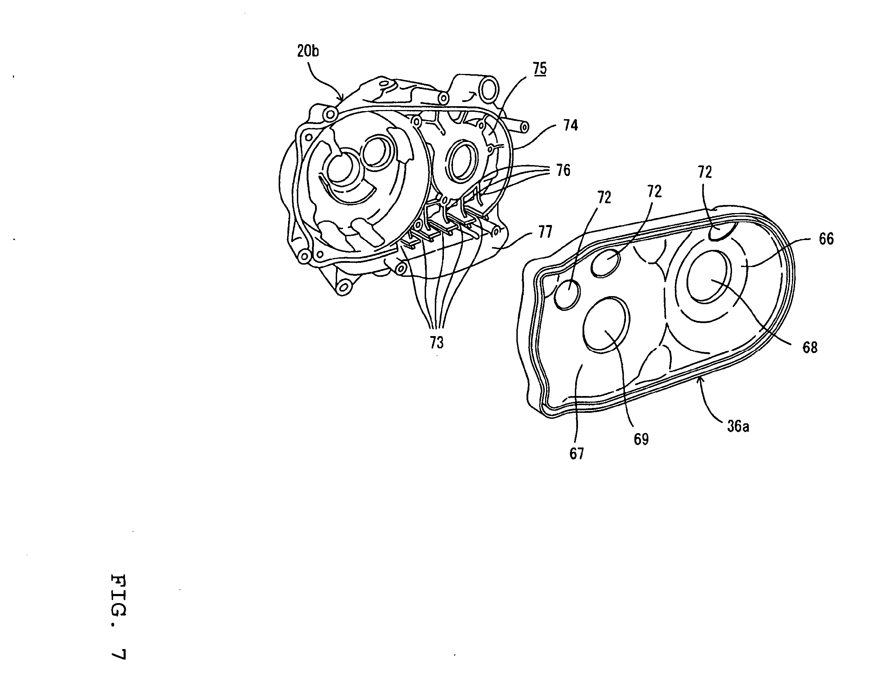

FIG. 7 is a perspective view of the second crankcase block 20b and the inner casing 36a. As shown in FIG. 7, a front half 66 of the inner casing 36a bulges out leftward into a bowl shape, and a rear half 67 of the inner casing 36a bulges out rightward into a bowl shape. A hole 68, into which the primary sheave shaft 23a (see FIG. 3) of the CVT 17 is to be inserted, is defined in the front half 66. A hole 69, into which the secondary sheave shaft 53 (see FIG. 3) of the CVT 17 is to be inserted, is defined in the rear half 67. It should be noted that the clutch cover 37 (see FIG. 3) interposed between the inner casing 36a and the second crankcase block 20b is not shown in FIG. 7.

A ventilation hole 72 is defined in the inner casing 36a. In the embodiment, three circular ventilation holes 72 are provided at positions higher than a vertical center of the inner casing 36a. It should be noted that no limitation is imposed on the shape of the ventilation hole 72. The position of the ventilation hole 72 is not limited to an upper portion of the inner casing 36a. In the embodiment, the ventilation holes 72 are provided in both the front half 66 and the rear half 67 of the inner casing 36a. Alternatively, the ventilation hole 72 may be provided only in either one of the front half 66 and the rear half 67. No limitation is imposed on the number of the ventilation hole 72 as well.

A plurality of ventilation holes 73 are defined in a lower side of a right portion of the second crankcase block 20b. More specifically, the second crankcase block 20b has a rim 74 that stands upright rightward. The rim 74 is correspondingly shaped to an outline of the transmission casing 36. A lower side of the rim 74 is formed into a partially-notched slits; in other words, formed into a so-called comb-like shape. Accordingly, a space 75 defined by the second crankcase block 20b and the inner casing 36a is in communication with the external of the engine unit 15 (see FIG. 3) through the ventilation holes 73. Because a right side of the rear half of the second crankcase block 20b is covered with the clutch cover 37, the space 75 in the rear half of the second crankcase block 20b is defined between the clutch cover 37 and the inner casing 36a (see FIG. 3).

Reinforcing ribs 76 are provided on the comb-like portion of the rim 74. An oil pan 77 is provided below the ventilation holes 73.

According to the above structure, as shown in FIG. 7, air in the belt chamber 38 is guided into the space 75 through the ventilation holes 72 in the inner casing 36a, and then discharged toward the oil pan 77 through the ventilation holes 73 in the second crankcase block 20b. As a result, the air is discharged out of the engine unit 15.

In the embodiment, the lower side of the rim 74 of the second crankcase block 20b is formed into a comb-like shape, thereby defining the plurality of slit-like ventilation holes 73. However, as a matter of course, the shape of each ventilation hole 73 is not limited to a slit, and the ventilation hole 73 may be an opening of another shape such as a circular opening. No limitation is imposed on the shape, size, and the number of the ventilation holes 73 in the second crankcase block 20b.

Next, cooling of the CVT 17 will be described.

When the engine unit 15 is actuated, the primary sheave shaft 23a of the CVT 17 is rotated. Accordingly, the stationary sheave member 51a of the primary sheave 51 is rotated, which also rotates the vanes 60. Consequently, a suction force that guides air from the closed casing 94 toward the belt chamber 38 through the intake duct 71 is generated. This suction force induces air from the outside into the closed casing 94 through the inlet port 61 (see FIG. 5(a)).

After passing through the inlet port 61, the air is first guided into the air flow path 64a and then guided in the Z1 direction along the partition wall 63 (see FIG. 6). Thus, the air flows to the side of the first casing member 95 and enters the air flow path 64b.

As described above, the first flow path F1 and the second flow path F2, which partially form the air flow path 64b, form a curved flow path, while the second flow path F2 and the third flow path F3, which partially form the air flow path 64b, form another curved flow path. Hence, the air guided into the air flow path 64b flows meandering along the partition walls 97a and 97b (see arrows in FIG. 5(b)). Meanwhile, a negative pressure generated near the exhaust port 62 causes a portion of the air flowing in the air flow path 64b to flow in the Z2 direction (see FIG. 6). In the course of flowing in the Z2 direction, the air passes through the air filter 79. Accordingly, dusts and the like in the air are filtered out through the air filter 79. Hence, clean air, from which dusts and the like are removed, is induced into the air flow path 64c. The air induced into the air flow path 64c flows toward the exhaust port 62 while meandering along the partition walls 98a and 98b in the same manner as in the air flow path 64b (see arrows in FIG. 5(a)).

After reaching the exhaust port 62, the air passes through the intake duct 71 to be sucked into the belt chamber 38. The air sucked into the belt chamber 38 flows around the primary sheave 51, the secondary sheave 52, and the V-belt 55, thereby cooling the primary sheave 51, the secondary sheave 52, and the V-belt 55.

The air having cooled the primary sheave 51, the secondary sheave 52, and the V-belt 55 is discharged out of the belt chamber 38 through the ventilation holes 72 in the inner casing 36a, and flows into the space 75 between the inner casing 36a and the second crankcase block 20b (see FIG. 7). The air in the space 75 is discharged out of the engine unit 15 through the ventilation holes 73 defined in the lower portion of the second crankcase block 20b. The CVT 17 is continuously cooled by the air flow described above.

As described above, in the motorcycle 1 of the embodiment, the partition walls 98a and 98b and the partition walls 97a and 97b form curved flow paths in the closed casing 94. In the embodiment, the flow path F1 is formed on the one side of the partition walls 98a and 97a and the flow path F2 is formed on the other side such that flow directions of the flow paths F1 and F2 are opposite from each other with the partition walls 98a and 97a therebetween. Similarly, the flow path F2 is formed on the one side of the partition walls 98b and 97b and the flow path F3 is formed the other side such that flow directions of the flow paths F2 and F3 are opposite from each other with the partition walls 98b and 97b therebetween. This structure forms the curved flow paths in the closed casing 94 especially compact. Forming the curved flow paths in the closed casing 94 as described above allows to form a long flow path within a confined space. Accordingly, noise produced by the resin-block-type belt (V-belt) 55 in the belt chamber 38 is effectively reduced in the closed casing 94 before escaping outside.

Meanwhile, from a viewpoint of flow smoothness in inducing and exhausting air without stagnation, an air flow path is preferably not curved. Nevertheless, in the motorcycle 1, the flow path is intentionally curved in the closed casing 94. This structure allows to prevent rectilinear propagation of high-frequency sound waves that are likely to propagate rectilinearly. Accordingly, leakage of high-frequency sound waves produced by the resin-block-type belt (V-belt) 55 from inside the belt chamber 38 to the outside can be prevented. Thus, according to the motorcycle 1, noise produced by the resin-block-type belt (V-belt) 55 can be favorably suppressed.

In addition, in the motorcycle 1, the longitudinal end 98c of the partition wall 98a and the longitudinal end 98d of the partition wall 98b are continuing to the inner wall of the closed casing 94 as viewed from the projecting directions (Z1 direction) of the partition walls 98a and 98b. The other ends 98a and 98f are separated from the inner wall of the closed casing 94.By forming the partition walls 98a and 98b as described above, a U-shaped flow path is formed in the closed casing 94. By forming the partition walls 97a and 97b in the similar manner to that of the partition walls 98a and 98b, another U-shaped flow path is formed in the closed casing 94 as well. Thus, according to the motorcycle 1, the U-shaped flow paths are formed in the closed casing 94 with the simple structure.

In the closed casing 94 of the motorcycle 1, a plurality of partition walls (the partition walls 97a, 98a, 97b, and 98b) that form the U-shaped flow paths are provided. This structure causes the air flow paths 64b and 64c to have at least two U-shaped curves within the closed casing 94 to thereby form a serpentine flow path. Accordingly, the motorcycle 1 is capable of suppressing leakage of high-frequency sound waves more effectively, thereby reducing noise produced by the resin-block-type belt (V-belt) 55 more effectively. Meanwhile, the shape of the closed casing 94 is not limited to that of the embodiment, and the number and shape of the partition walls are not limited to those of the embodiment. That is, as a matter of course, three or more partition walls may be provided in the closed casing 94.

In the motorcycle 1, the partition walls 97a and 97b are formed integrally with the first casing member 95 and the partition walls 98a and 98b are formed integrally with the second casing member 96. This structure allows the partition walls 97a, 97b, 98a, and 98b easily to be formed in the closed casing 94.

Furthermore, partitions according to the present invention are formed with the partition walls 97a, 97b, 98a, and 98b each formed with a plate piece. This structure allows to secure a large length of the air flow path 64 within the closed casing 94 and to form the closed casing 94 compact.

In addition, the closed casing 94 of the motorcycle 1 is formed with two members; the first casing member 95 and the second casing member 96, which are aligned in the Z direction (the projecting direction of the partition walls 97a, 97b, 98a, and 98b). This structure allows the partition walls 97a, 97b, 98a, and 98b to be located within the closed casing 94 easily.

According to the motorcycle 1, the inlet port 61, the exhaust port 62, and the partition wall 63 are provided in the second casing member 96. The partition wall 63 partitions a space in the second casing member 96 into a space on the side of the inlet port 61 and that on the side of the exhaust port 62, and projects out of the second casing member 96 toward the inside of the closed casing 94 (in the Z1 direction). Hence, the partition wall 63 forms the air flow path 64 (air flow paths 64a, 64b, and 64c) such that the air flow path 64 extends from the inlet port 61 toward the first casing member 95, turns back in the first casing member 95 and then extends toward the exhaust port 62. Consequently, the air flow path 64 meanders not only in the X-Y plane shown in FIGs. 5(a) and 5(b) but also in the Z-X plane shown in FIG. 6; that is, the air flow path 64 three-dimensionally meanders. This structure allows the motorcycle 1 to suppress leakage of high-frequency sound waves more effectively, thereby reducing noise produced by the resin-block-type belt (V-belt) 55 more effectively.

In the embodiment, the air passage according to the invention is an intake passage that guides air into the belt chamber 38. The air flow path 64 formed in the closed casing 94 is upstream of the belt chamber 38. The air filter 79 is provided between the inlet port 61 and the exhaust port 62 of the air flow path 64. Thus, the motorcycle 1 is not only capable of suppressing noise leakage through the inlet passage but also supplying clean air to the belt chamber 38. This can improve the durability of the CVT 17.

In the motorcycle 1, the air filter 79 is located at a position between the inlet port 61 and the exhaust port 62 of the air flow path 64 as well as between the first casing member 95 and the second casing member 95 that form the closed casing 94. By virtue of this arrangement, the air filter 79 can be attached to the motorcycle 1 easily even when the air flow path 64 is formed into a complicated shape to suppress noise. This can reduce a work and cost necessary for maintenance.

The present inventor has conducted extensive studies and found that air guided by the plurality of air-inducing vanes 60 into the belt chamber 38 is a steady flow rather than a pulsating flow of air aspirated by the engine 16, and that an air chamber for temporarily storing cooling air for the CVT 17 thereby suppressing pulsation of the air flow is unnecessary. Based on the finding, an air chamber for storing cooling air of the CVT 17 is not provided in the motorcycle 1. This structure allows the motorcycle 1 to have a large space for installing the closed casing 94 inside the body frame 2. Accordingly, the air flow path 64 can be formed long, thereby suppressing the noise produced by the resin-block-type belt (V-belt) 55 more effectively.

In the motorcycle 1, the closed casing 94 is formed independently of the air cleaner 43 for the engine 16. This structure allows to secure a larger space for the air flow path 64 as compared to a structure in which the closed casing 94 is formed integrally with the air cleaner 43 for the engine 16. Accordingly, the air flow path 64 can be formed long, thereby suppressing the noise produced by the resin-block-type belt (V-belt) 55 more effectively.

The inlet port 61 in the closed casing 94 of the motorcycle 1 is located below the seat 3. According to this arrangement, the inlet port 61 is covered with the seat 3 from above. This allows to prevent entry of rain, dusts, or the like into the closed casing 94 through the inlet port 61. The inlet port 61 is located above the pivot shaft 10. That is, the inlet port 61 is at a position away from the ground by a relatively large distance, where the inlet port 61 less easily sucks water and dusts. Hence, the motorcycle 1 is capable of supplying clean air to the belt chamber 38.

As shown in FIG. 2, according to the embodiment, the closed casing 94 is located below the seat 3, and the intake duct 71 is connected with the closed casing 94 at one end and connected with a front portion of the transmission casing 36 at the other end. This structure allows to form a long the intake duct 71. Thus, in the motorcycle 1, the air flow path 64 that is formed by the intake duct 71 and the partition walls 97a, 97b, 98a, and 98b can be formed long. This allows more effective suppression of the noise produced by the resin-block-type belt (V-belt) 55.

As shown in FIG. 2, according to the embodiment, the exhaust pipe 41 of the engine 16 extends rearward passing below the transmission casing 36 of the CVT 17. This arrangement allows to prevent interference between the exhaust pipe 41 and the closed casing 94 easily. Hence, the closed casing 94 can be formed large without being obstructed by the exhaust pipe 41. This allows a large space to be secured for the closed casing 94 inside the body frame 2. According to the motorcycle 1, the air flow path 64 can be formed long, thereby suppressing the noise produced by the resin-block-type belt (V-belt) 55 more effectively.

According to the embodiment, the vanes 60 for blowing air are formed on the outer side of the stationary sheave member 51a of the primary sheave 51. This structure allows air to be guided from the outside into the belt chamber 38 smoothly even when the air passage is formed long as in the case of the invention. Thus, according to the motorcycle 1, suppression of noise and improvement of cooling capability of the CVT 17 are attained.

In the embodiment, the example, in which the air passage according to the invention is embodied as an intake passage for guiding air to the belt chamber 38, has been described. However, the air passage according to the invention is not limited to such an intake passage, and may be an exhaust passage. When the air passage is embodied as the exhaust passage, the transmission casing 36 preferably has, e.g., an additional intake duct or intake opening. Even when constructed as described above, the exhaust passage serving as the air passage according to the invention can be formed compact and long. In addition, the exhaust passage serving as the air passage according to the invention can be formed into a serpentine flow path. Accordingly, leakage of noise produced by the V-belt 51 from the belt chamber 38 in the transmission casing 36 through the exhaust passage can be prevented. Thus, even when the structure is adopted, the motorcycle 1 is capable of favorably suppressing the noise produced by the resin-block-type belt (V-belt) 55.

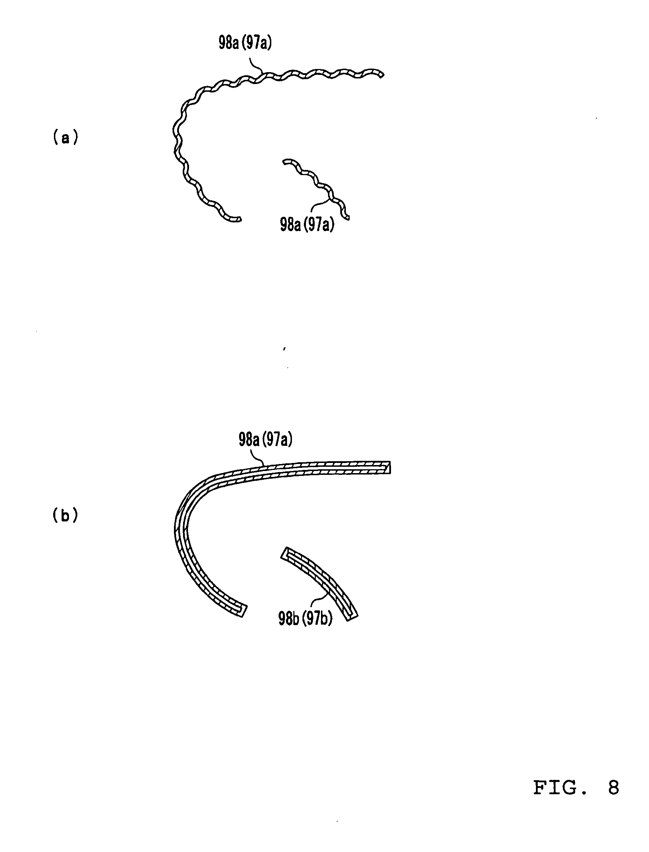

In the embodiment, the "plate piece" forming each of the partition walls 98a, 98b, 97a, and 97b serving as the partition has a smooth curved surface. However, a shape of the "plate piece" is not limited to those shown in FIGs. 5(a) and 5(b). For example, the plate piece may have an uneven surface as shown in FIG. 8(a). Alternatively, the plate piece may have a hollow therein as shown in FIG. 8(b). In the embodiment, the partition walls 98a and 98b are formed integrally with the second casing member 96. Alternatively, the partition walls 98a and 98b may be formed independently of the second casing member 96, and fixed together by adhesion or a like method. Similarly, the partition walls 97a and 97b may be formed independently of the first casing member 95, or the partition wall 63 may be formed independently of the second casing member 96.

In an embodiment of the invention, as in the case of the motorcycle 1, noise produced by the resin-block-type belt (V-belt) 55 of a saddle-ride-type other than the motorcycle 1 can be suppressed as well. In an embodiment of the invention, a long air passage can be secured within a small space. This exhibits particularly significant effects to vehicles such as the motorcycle 1 according to the embodiment, for which widening its vehicle width is unfavorable.

The embodiments have been described about an example structure in which the transmission casing 36 has no sound absorber therein. However, the invention does not exclude installation of a sound absorber on an inner surface of the transmission casing 36. Hence, as a matter of course, in the embodiments, a sound absorber can be installed on, e.g., an inner surface of the transmission casing 36 to thereby suppress noise more effectively.

### DESCRIPTION OF REFERENCE NUMERALS AND SYMBOLS

1: motorcycle
3: seat
9: rear arm
10: pivot shaft
12: front wheel
13: rear wheel
15: engine unit
16: engine
17: belt type continuously variable transmission (CVT)
36: transmission casing
38: belt chamber
43: air cleaner (engine air cleaner)
51: primary sheave
52: secondary sheave
55: V-belt (resin-block-type belt)
61: inlet port
62: exhaust port
63: partition wall
64: air passage
64a:air passage
64b:air passage
64c:air passage
65: support
71: intake duct (air passage, intake passage)
78: intake opening
79: air filter
94: closed casing (air passage, intake passage)
95: first casing member
96: second casing member
97a, 97b:partition wall (partition)
98a, 98b:partition wall (partition)

## Claims

1. A straddle-type vehicle comprising:
an engine unit (15) having an engine (16), a belt type continuously variable transmission (17) having a resin-block-type belt, and a transmission casing (36), in which a belt chamber (36) for accommodating the belt type continuously variable transmission (17) therein is defined; and
an air passage (71) being any one of an intake passage for guiding air into the belt chamber (36) and an exhaust passage for venting air out of the belt chamber (36),
wherein the air passage (71) includes
a closed casing (94), in which an inlet port (61) and an exhaust port (62) are formed, and
one or more partitions (97a, 97b, 98a, 98b) each projecting out of an inner wall of the closed casing (94) toward an inside of the closed casing (94) and having opposite side surfaces extending in a direction intersecting with a projecting direction of the partition (97a, 97b, 98a, 98b);
wherein a flow path (F1, F2) is formed on each of a side of one of the side surfaces of the partition (97a, 97b, 98a, 98b) and a side of the other side surface, in which flow directions of the flow paths (F1, F2) are opposite from each other;
wherein the flow paths (F1, F2) form a curved flow path that runs from the inlet port (61) to the exhaust port (62) in the closed casing (94),
wherein the closed casing (94) is formed with a dish-shaped first casing member (95) and a dish-shaped second casing member (96) opposing each other in the projecting direction of the partition (97a, 97b, 98a, 98b),
the second casing (96) member including
the inlet port (61),
the exhaust port (62), and
a partition wall (63) that partitions between the inlet port (61) and the exhaust port (62) such that air sucked through the inlet port (61) is first guided to a side of the first casing member (95) and then discharged out through the exhaust port (62);
wherein the air passage (71) is the intake passage for guiding air into the belt chamber (36); and
an air filter (79) is provided at a position between the first casing member (95) and the second casing member (96) in the closed casing (94) as well as between the inlet port (61) and the exhaust port (62).

2. The straddle-type vehicle according to claim 1,
wherein one of longitudinal ends (98c, 98d) of the partition (97a, 97b, 98a, 98b) is connected with the inner wall of the closed casing (94) and the other longitudinal end (98e, 98f) of the partition (97a, 97b, 98a, 98b) is separated from the inner wall of the closed casing (94); and
a first flow path (F1) that runs from the one end (98c) to the other end (98e) of the partition is formed on the side of the one side surface of the partition (97a, 98a), a second flow path (F2) that runs from the other end (98e) to the one end (98c) of the partition is formed on the side of the other side surface of the partition (97a, 98a), and the first flow path (F1) and the second flow path (F2) form a U-shaped flow path.

3. The straddle-type vehicle according to claim 1 or claim 2, comprising a plurality of partitions (97a, 97b, 98a, 98b), the plurality of partitions forming a serpentine flow path in the closed casing (94).

4. The straddle-type vehicle according to any preceding claim, wherein the closed casing (94) and the partition (97a, 97b, 98a, 98b) are formed integrally with each other.

5. The straddle-type vehicle according to any preceding claim, wherein the partition (97a, 97b, 98a, 98b) is a plate piece.

6. The straddle-type vehicle according to any preceding claim, wherein the closed casing (94) is formed with a plurality of casing members (95, 96) aligned in the projecting direction of the partition (97a, 97b, 98a, 98b).

7. The straddle-type vehicle according to any preceding claim, wherein the air passage (71) is the intake passage for guiding air to the belt chamber (36).

8. The straddle-type vehicle according to claim 7, wherein the intake passage has no air chamber for temporarily storing outside air.

9. The straddle-type vehicle according to claim 7 or claim 8, further comprising an engine air cleaner (43) for cleaning air to be guided to the engine (16), wherein the closed casing (94) is formed independently of the engine air cleaner (43).

10. The straddle-type vehicle according to any of claims 7 to 9, further comprising a seat (3) for supporting a passenger, wherein the inlet port (61) is below the seat (3).

11. The straddle-type vehicle according to any preceding claim, further comprising:
a body frame (6);
a rear arm (9) supporting a rear wheel (13); and
a pivot shaft (10) pivotally supporting the rear arm (13) on the body frame (6), wherein the inlet port (61) is at a position higher than the pivot shaft (10).

12. A straddle-type vehicle according to any preceding claim, the straddle-type vehicle being a motorcycle.

## Patentansprüche

1. Ein Fahrzeug vom rittlings zu fahrenden Typ, das folgende Merkmale aufweist:
eine Motoreinheit (15), die einen Motor (16), ein kontinuierlich veränderliches Getriebe vom Riementyp (17), das einen Riemen vom Harzblocktyp aufweist, und ein Getriebegehäuse (36), in dem eine Riemenkammer (36) zum Unterbringen des kontinuierlich veränderlichen Getriebes vom Riementyp (17) definiert ist, aufweist; und
einen Luftkanal (71), der ein Ansaugkanal zum Führen von Luft in die Riemenkammer (36) und/oder ein Auslasskanal zum Ablassen von Luft aus der Riemenkammer (36) ist,
wobei der Luftkanal (71) folgende Merkmale umfasst:
ein geschlossenes Gehäuse (94), in dem eine Einlassöffnung (61) und eine Auslassöffnung (62) gebildet sind, und
eine oder mehrere Abtrennungen (97a, 97b, 98a, 98b), die jeweils aus einer Innenwand des geschlossenen Gehäuses (94) hin zu einem Inneren des geschlossenen Gehäuses (94) vorstehen und gegenüberliegende Seitenoberflächen aufweisen, die sich in einer Richtung erstrecken, die sich mit einer Vorstandsrichtung der Abtrennung (97a, 97b, 98a, 98b) schneidet;
wobei ein Strömungsweg (F1, F2) jeweils auf einer Seite einer der Seitenoberflächen der Abtrennung (97a, 97b, 98a, 98b) und auf einer Seite der anderen Seitenoberfläche gebildet ist, wobei die Strömungsrichtungen der Strömungswege (F1, F2) zueinander entgegengesetzt sind;
wobei die Strömungswege (F1, F2) einen gekrümmten Strömungsweg bilden, der von der Einlassöffnung (61) zu der Auslassöffnung (62) in dem geschlossenen Gehäuse (94) verläuft,
wobei das geschlossene Gehäuse (94) mit einem schalenförmigen ersten Gehäusebauglied (95) und einem schalenförmigen zweiten Gehäusebauglied (96) gebildet ist, die einander in der Vorstandsrichtung der Abtrennung (97a, 97b, 98a, 98b) gegenüberliegen,
wobei das zweite Gehäuse(96)bauglied folgende Merkmale umfasst:
die Einlassöffnung (61),
die Auslassöffnung (62), und
eine Trennwand (63), die zwischen der Einlassöffnung (61) und der Auslassöffnung (62) derart trennt, dass Luft, die durch die Einlassöffnung (61) angesaugt wird, zuerst auf eine Seite des ersten Gehäusebauglieds (95) geführt wird und anschließend durch die Auslassöffnung (62) abgeführt wird;
wobei der Luftkanal (71) der Ansaugkanal zum Führen von Luft in die Riemenkammer (36) ist; und
ein Luftfilter (79) in einer Position zwischen dem ersten Gehäusebauglied (95) und dem zweiten Gehäusebauglied (96) in dem geschlossenen Gehäuse (94) sowie zwischen der Einlassöffnung (61) und der Auslassöffnung (62) vorgesehen ist.

2. Das Fahrzeug vom rittlings zu fahrenden Typ gemäß Anspruch 1,
bei dem eines von Längsenden (98c, 98d) der Abtrennung (97a, 97b, 98a, 98b) mit der Innenwand des geschlossenen Gehäuses (94) verbunden ist und das andere Längsende (98e, 98f) der Abtrennung (97a, 97b, 98a, 98b) von der Innenwand des geschlossenen Gehäuses (94) getrennt ist; und
ein erster Strömungsweg (F1), der von dem einen Ende (98c) zu dem anderen Ende (98e) der Abtrennung verläuft, auf der Seite der einen Seitenoberfläche der Abtrennung (97a, 98a) gebildet ist, ein zweiter Strömungsweg (F2), der von dem anderen Ende (98e) zu dem einen Ende (98c) der Abtrennung verläuft, auf der Seite der anderen Seitenoberfläche der Abtrennung (97a, 98a) gebildet ist, und der erste Strömungsweg (F1) und der zweite Strömungsweg (F2) einen U-förmigen Strömungsweg bilden.

3. Das Fahrzeug vom rittlings zu fahrenden Typ gemäß Anspruch 1 oder Anspruch 2, das eine Mehrzahl von Abtrennungen (97a, 97b, 98a, 98b) aufweist, wobei die Mehrzahl von Abtrennungen in dem geschlossenen Gehäuse (94) einen geschlängelten Strömungsweg bilden.

4. Das Fahrzeug vom rittlings zu fahrenden Typ gemäß einem beliebigen vorhergehenden Anspruch, bei dem das geschlossene Gehäuse (94) und die Abtrennung (97a, 97b, 98a, 98b) einstückig miteinander gebildet sind.

5. Das Fahrzeug vom rittlings zu fahrenden Typ gemäß einem beliebigen vorhergehenden Anspruch, bei dem die Abtrennung (97a, 97b, 98a, 98b) ein Plattenstück ist.

6. Das Fahrzeug vom rittlings zu fahrenden Typ gemäß einem beliebigen vorhergehenden Anspruch, bei dem das geschlossene Gehäuse (94) mit einer Mehrzahl von Gehäusebaugliedern (95, 96) gebildet ist, die in der Vorstandsrichtung der Abtrennung (97a, 97b, 98a, 98b) ausgerichtet sind.

7. Das Fahrzeug vom rittlings zu fahrenden Typ gemäß einem beliebigen vorhergehenden Anspruch, bei dem der Luftkanal (71) der Ansaugkanal zum Führen von Luft zu der Riemenkammer (36) ist.

8. Das Fahrzeug vom rittlings zu fahrenden Typ gemäß Anspruch 7, bei dem der Ansaugkanal keine Luftkammer zum vorübergehenden Speichern von Außenluft aufweist.

9. Das Fahrzeug vom rittlings zu fahrenden Typ gemäß Anspruch 7 oder Anspruch 8, das ferner einen Motorluftreiniger (43) zum Reinigen von zu dem Motor (16) zu führender Luft aufweist, wobei das geschlossene Gehäuse (94) unabhängig von dem Motorluftreiniger (43) gebildet ist.

10. Das Fahrzeug vom rittlings zu fahrenden Typ gemäß einem der Ansprüche 7 bis 9, das ferner einen Sitz (3) zum Tragen eines Mitfahrers aufweist, wobei sich die Einlassöffnung (61) unter dem Sitz (3) befindet.

11. Das Fahrzeug vom rittlings zu fahrenden Typ gemäß einem beliebigen vorhergehenden Anspruch, das ferner folgende Merkmale aufweist:
einen Karosserierahmen (6);
einen Hinterarm (9), der ein Hinterrad (13) trägt; und
eine Schwenkwelle (10), die den Hinterarm (13) schwenkbar an dem Karosserierahmen (6) trägt, wobei sich die Einlassöffnung (61) in einer Position befindet, die höher liegt als die Schwenkwelle (10).

12. Das Fahrzeug vom rittlings zu fahrenden Typ gemäß einem beliebigen vorhergehenden Anspruch, wobei das Fahrzeug vom rittlings zu fahrenden Typ ein Motorrad ist.

## Revendications

1. Véhicule du type à enfourcher, comprenant:
une unité de moteur (15) présentant un moteur (16), une transmission à variation continue de type courroie (17) présentant une courroie de type bloc de résine, et un boîtier de transmission (36) dans lequel est définie une chambre à courroie (36) destinée à abriter la transmission à variation continue de type courroie (17); et
un passage d'air (71) qui est l'un quelconque parmi un passage d'admission destiné à guider l'air vers la chambre à courroie (36) et un passage d'échappement destiné à évacuer l'air hors de la chambre à courroie (36),
dans lequel le passage d'air (71) comporte
un boîtier fermé (94) dans lequel sont formés un orifice d'entrée (61) et un orifice d'échappement (62), et
une ou plusieurs cloisons (97a, 97b, 98a, 98b) faisant saillie, chacune, par rapport à une paroi intérieure du boîtier fermé (94) vers l'intérieur du boîtier fermé (94) et présentant des surfaces latérales opposées s'étendant dans une direction venant en intersection avec une direction de saillie de la cloison (97a, 97b, 98a, 98b);
dans lequel un trajet de circulation (F1, F2) est formé de chacun parmi un côté de l'une des surfaces latérales de la cloison (97a, 97b, 98a, 98b) et un côté de l'autre surface latérale, dans lequel les directions de circulation des trajets de circulation (F1, F2) sont opposées l'une à l'autre;
dans lequel les trajets de circulation (F1, F2) forment un trajet de circulation courbe qui s'étend de l'orifice d'entrée (61) à l'orifice d'échappement (62) dans le boîtier fermé (94),
dans lequel le boîtier fermé (94) est formé avec un premier élément de boîtier en forme de cuvette (95) et un deuxième élément de boîtier en forme de cuvette (96) opposés l'un à l'autre dans la direction de saillie de la cloison (97a, 97b, 98a, 98b),
le deuxième élément de boîtier (96) comportant
l'orifice d'entrée (61),
l'orifice d'échappement (62), et
une paroi de séparation (63) qui divise entre l'orifice d'entrée (61) et l'orifice d'échappement (62) de sorte que l'air aspiré à travers l'orifice d'entrée (61) soit tout d'abord guidé vers un côté du premier élément de boîtier (95) et ensuite évacué à travers l'orifice d'échappement (62);
dans lequel le passage d'air (71) est le passage d'admission destiné à guider l'air vers la chambre à courroie (36); et
un filtre d'air (79) est prévu à une position entre le premier élément de boîtier (95) et le deuxième élément de boîtier (96) dans le boîtier fermé (94), ainsi qu'entre l'orifice d'entrée (61) et l'orifice d'échappement (62).

2. Véhicule du type à enfourcher selon la revendication 1,
dans lequel l'une des extrémités longitudinales (98c, 98d) de la cloison (97a, 97b, 98a, 98b) est connectée à la paroi intérieure du boîtier fermé (94) et l'autre extrémité longitudinale (98e, 98f) de la cloison (97a, 97b, 98a, 98b) est séparée de la paroi intérieure du boîtier fermé (94); et
un premier trajet de circulation (F1) qui s'étend de l'une extrémité (98c) à l'autre extrémité (98e) de la cloison est formé du côté de l'une surface latérale de la cloison (97a, 98a), un deuxième trajet de circulation (F2) qui s'étend de l'autre extrémité (98e) à l'une extrémité (98c) de la cloison est formé du côté de l'autre surface latérale de la cloison (97a, 98a), et le premier trajet de circulation (F1) et le deuxième trajet de circulation (F2) forment un chemin de circulation en forme de "U".

3. Véhicule du type à enfourcher selon la revendication 1 ou la revendication 2, comprenant une pluralité de cloisons (97a, 97b, 98a, 98b), la pluralité de partitions formant un chemin de circulation en serpentin dans le boîtier fermé (94).

4. Véhicule du type à enfourcher selon l'une quelconque des revendicati.ons précédentes, dans lequel le boîtier fermé (94) et la cloison (97a, 97b, 98a, 98b) sont formés de manière solidaire l'un de l'autre.

5. Véhicule du type à enfourcher selon l'une quelconque des revendications précédentes, dans lequel la cloison (97a, 97b, 98a, 98b) est un morceau de plaque.

6. Véhicule du type à enfourcher selon l'une quelconque des revendications précédentes, dans lequel le boîtier fermé (94) est formé avec une pluralité d'éléments de boîtier (95, 96) alignés dans la direction de saillie de la cloison (97a, 97b, 98a, 98b).

7. Véhicule du type à enfourcher selon l'une quelconque des revendications précédentes, dans lequel le passage d'air (71) est le passage d'admission destiné à guider l'air vers la chambre à courroie (36).

8. Véhicule du type à enfourcher selon la revendication 7, dans lequel le passage d'admission ne présente pas de chambre à air destinée à stocker temporairement de l'air extérieur.

9. Véhicule du type à enfourcher selon la revendication 7 ou la revendication 8, comprenant par ailleurs un épurateur d'air de moteur (43) destiné à épurer l'air à guider vers le moteur (16), dans lequel le boîtier fermé (94) est formé indépendamment de l'épurateur d'air de moteur (43).

10. Véhicule du type à enfourcher selon l'une quelconque des revendications 7 à 9, comprenant par ailleurs un siège (3) destiné à supporter un passager, dans lequel l'orifice d'entrée (61) se trouve au-dessous du siège (3).

11. Véhicule du type à enfourcher selon l'une quelconque des revendications précédentes, comprenant par ailleurs:
un châssis de carrosserie (6);
un bras arrière (9) supportant une roue arrière (13); et
un arbre de pivotement (10) supportant en pivotement le bras arrière (13) sur le châssis de carrosserie (6), dans lequel l'orifice d'entrée (61) se trouve dans une position plus élevée que l'axe de pivotement (10).

12. Véhicule du type à enfourcher selon l'une quelconque des revendications précédentes, le véhicule du type à enfourcher étant une motocyclette.
